(19) Europäisches Patentamt
European Patent Office
Office européen des brevets

(11) Veröffentlichungsnummer: **0 462 438 B1**

(12) **EUROPÄISCHE PATENTSCHRIFT**

(45) Veröffentlichungstag der Patentschrift: **01.02.95**

(51) Int. Cl.6: **C08G 18/10**, C08G 18/30, C08J 9/02, //(C08G18/30, 101:00)

(21) Anmeldenummer: **91108987.8**

(22) Anmeldetag: **01.06.91**

Die Akte enthält technische Angaben, die nach dem Eingang der Anmeldung eingereicht wurden und die nicht in dieser Patentschrift enthalten sind.

(54) **Verfahren zur Herstellung von im wesentlichen geschlossenzelligen Urethan-, Harnstoff- und Biuretgruppen aufweisenden Hartschaumstoffen mit hervorragender Haftung an festen Oberflächen und deren Verwendung.**

(30) Priorität: **16.06.90 DE 4019306**

(43) Veröffentlichungstag der Anmeldung: **27.12.91 Patentblatt 91/52**

(45) Bekanntmachung des Hinweises auf die Patenterteilung: **01.02.95 Patentblatt 95/05**

(84) Benannte Vertragsstaaten: **DE DK ES FR GB IT SE**

(56) Entgegenhaltungen:
DE-C- 3 910 100
FR-A- 1 352 278
FR-A- 2 069 356
US-A- 3 846 347

(73) Patentinhaber: **BAYER AG**

**D-51368 Leverkusen (DE)**

(72) Erfinder: **Welte, Rainer, Dr.**
**Kaiserstrasse 7**
**W-5090 Leverkusen 1 (DE)**
Erfinder: **Scholl, Hans-Joachim, Dr.**
**Am Feldrain 5**
**W-5000 Köln 80 (DE)**

EP 0 462 438 B1

EP 0 462 438 B1

**Beschreibung**

Die Erfindung betrifft ein neues Verfahren zur Herstellung von im wesentlichen geschlossenzelligen Urethan-, Harnstoff- und Biuretgruppen aufweisenden Hartschaumstoffen mit hervorragender Haftung an festen Oberflächen und deren Verwendung als Dämmstoffe und/oder zur Verstärkung von mechanischen Konstruktionsteilen.

Verfahren zur Herstellung von im wesentlichen geschlossenzelligen Urethan-, Harnstoff- und Biuretgruppen aufweisenden Hartschaumstoffen sind allgemein bekannt.

Eine Übersicht zur Herstellung entsprechender Hartschaumstoffe wird beispielsweise im Kunststoff-Handbuch, Band VII, "Polyurethane", herausgegeben von R. Vieweg und A. Höchtlen, Seiten 504 ff. gegeben (Verlag Carl Hanser, München 1966).

Zur Herstellung derartiger Hartschaumstoffe werden üblicherweise aromatische Polyisocyanate mit höhermolekularen Polyolen, vorzugsweise Polyether- oder Polyesterpolyolen, in Gegenwart von Treibmitteln, Katalysatoren, Flammschutzmitteln und anderen Hilfs- und Zusatzstoffen zur Reaktion gebracht. Es ist ferner bekannt, anstelle von Polyether- oder Polyesterpolyolen Mischungen der genannten Aufbaukomponenten zu verwenden. Mitentscheidend für die Durchführung dieser Maßnahme war eine Kostensenkung, die durch Abmischung von teueren zur Herstellung von qualitativ hochwertigen PU-Hartschaumstoffen geeigneten Polyesterpolyolen mit preisgünstigen Polyetherpolyolen erzielt wird. Geeignete Polyesterpolyole mit niedriger Viskosität zur Herstellung von PU-Hartschaumstoffen mit guten mechanischen Eigenschaften werden beispielsweise in der DE-A-27 04 196 beschrieben.

Auch können Ester als Recyclingprodukte von höhermolekularen Estern eingesetzt werden; in diesem Fall können auch die Ester als preisgünstigere Komponenten zur Reduzierung des Gemischpreises eingesetzt werden. Diese preiswerten Ester werden beispielsweise durch Glykolyse hochmolekularer Dimethylterephalat (DMT)-Polymere gewonnen oder durch Verarbeitung der bei der DMT-Herstellung zurückbleibenden Destillationsrückstände.

Durch die Verwendung von Polyesterpolyolen als höhermolekulare Polyhydroxylverbindung zur Herstellung von Urethangruppen enthaltenden Hartschaumstoffen kann insbesondere deren Flammwidrigkeit verbessert und die Sprödigkeit reduziert werden.

Alle genannten Verfahrensweisen erfordern zwingend die Mitverwendung von FCKW-Treibmitteln, damit erwünschte Hartschaum-Stoffcharakteristiken wie z.B. Zähigkeit, Haftung an Deckschichten sowie verringerte Entflammbarkeit erzielt werden.

Wie einem Vergleichsbeispiel zu entnehmen ist, zeigen entsprechende Hartschäume ohne die Mitverwendung von FCKW-Treibmittel wesentliche Nachteile: Sprödigkeit, Entflammbarkeit und Nichthaftung an Deckschichten.

DE-C 3 910 100 beschreibt ein "one-shot"-Verfahren zur Herstellung von geschlossenzelligen Polyurethan-Hartschaumstoffen, die zwar bei höheren Temperaturen (60°C) eine gute Haftung an Deckschichten aufweisen, jedoch keine für die Praxis ausreichende Haftung bei Raumtemperatur. Dieser Nachteil wurde mit der vorliegenden Erfindung überwunden. Es hat sich nämlich überraschenderweise gezeigt, daß es mit dem erfindungsgemäßen Prepolymer-Verfahren gelingt, schon bei Raumtemperatur eine perfekte Haftung des Schaumstoffs an festen Oberflächen zu erreichen.

Der Erfindung lag somit die Aufgabe zugrunde, ein neues Verfahren zur Herstellung entsprechender Hartschaumstoffe mit großer Zähigkeit, schon bei Raumtemperatur hervorragender Haftung und verringerter Entflammbarkeit zur Verfügung zu stellen, das

a) mit herkömmlichen Rezepturbestandteilen auskommt und dennoch

b) den Einsatz von FCKW-Treibmitteln vermeidet.

Wie überraschenderweise gefunden wurde, konnte diese Aufgabe mit dem nachstehend beschriebenen, erfindungsgemäßen Verfahren gelöst werden.

Gegenstand der Erfindung ist ein Verfahren zur Herstellung von im wesentlichen geschlossenenzelligen Urethan-, Harnstoff- und Biuretgruppen aufweisenden Hartschaumstoffen mit schon bei Raumtemperatur hervorragender Haftung an festen Oberflächen durch Umsetzung von

a) endständige NCO-Gruppen aufweisenden Prepolymeren mit

b) Verbindungen mit mindestens zwei gegenüber Isocyananaten reaktionsfähigen Wasserstoffatomen von einem Molekulargewicht in der Regel von 400 - 10.000 in Gegenwart von

c) Katalysatoren und

d) Wasser als Treibmittel und gegebenenfalls in Gegenwart von

e) Kettenverlängerungs- und/oder Vernetzungsmitteln sowie

2

f) Hilfsmitteln und/oder Zusatzstoffen,

dadurch gekennzeichnet, daß man als NCO-Gruppen aufweisendes Prepolymer das Umsetzungsprodukt von a Gew.-Teilen eines mindestens difunktionellen Polyols mit b Gew.-Teilen eines mindestens difunktionellen Polyisocyanats verwendet, wobei

1) das Verhältnis a:b mindestens 1:10 beträgt und

2) die OH-Zahl des mindestens difunktionellen Polyols <100 ist.

Gegenstand der Erfindung ist auch die Verwendung der erfindungsgemäßen, im wesentlichen geschlossenzelligen Urethan-, Harnstoff- und Biuretgruppen aufweisenden Hartschaumstoffe mit hervorragender Haftung an festen Oberflächen als Dämmstoffe und/oder zur Verstärkung von mechanischen Konstruktionsteilen.

Von erfindungswesentlicher Bedeutung ist die Verwendung der genannten speziellen Prepolymeren.

Für die Durchführung des erfindungsgemäßen Verfahrens werden verwendet:

a) NCO-Gruppen aufweisende Prepolymere, hergestellt aus

1) aliphatischen, cycloaliphatischen, araliphatischen, aromatischen und heterocyclischen Polyisocyanaten, wie sie z.B. von W. Siefken in Justus Liebigs Annalen der Chemie, 362, Seiten 75 bis 136, beschrieben werden beispielsweise solche der Formel

$$Q(NCO)_n$$

in der

n = 2 bis 5, vorzugsweise 2 bis 3, und

Q = einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen,

einen aromatischen Kohlenwasserstoffrest

mit 6 bis 15, vorzugsweise 6 bis 13 C-Atomen bedeuten, z.B. solchen Polyisocyanaten, wie sie in der DE-OS 2 832 253, Seiten 10 bis 11, beschrieben werden.

Besonders bevorzugt werden in der Regel die technisch leicht zugänglichen Polyisocyanate, z.B. das 2,4-und 2,6-Toluylendiisocyanat, sowie beliebige Gemische dieser Isomeren ("TDI") und Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich mit 2,4-und/oder 2,6-Toluylendiisocyanat bzw. vom 4,4'-und/oder 2,4'-Diphenylmethandiisocyanat ableiten.

2) Ausgangskomponenten für die Prepolymere sind ferner höhermolekulare organische Verbindungen mit mindestens zwei Hydroxylgruppen. Erfindungsgemäß handelt es sich hierbei um Polyole, deren OH-Zahl kleiner 100 ist.

Eine allgemeine Übersicht zur Herstellung von Prepolymeren ist beispielsweise beschrieben in:

Kunststoffhandbuch "Polyurethane", Band 7, herausgegeben von Dr. G. Oertel, S. 84-85 (Verlag Carl Hanser, München 1983).

Die erfindungsgemäßen Prepolymeren werden entsprechend hergestellt, indem das Gewichtsverhältnis Polyisocyanat 1) zu Polyol 2) mindestens 10:1, vorzugsweise 10:1,5 bis 10:2,5 beträgt.

b) Ausgangskomponenten für die Schaumstoffherstellung sind ferner Verbindungen mit mindestens zwei gegenüber Isocyanaten reaktionsfähigen Wasserstoffatomen von einem Molekulargwicht in der Regel von 400 - 10.000. Hierunter versteht man neben Aminogruppen, Thiolgruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1.000 bis 6.000, vorzugsweise 2.000 bis 6.000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden.

c) Erfindungsgemäß werden die in der Polyurethanchemie an sich üblichen Katalysatoren mitverwendet.

d) Als Treibmittel wird Wasser eingesetzt. Gegebenenfalls können nicht-halogenhaltige Treibmittel mitverwendet werden wie z.B. niedrig siedende Alkane, Alkene, Ester, Ketone und Ether.

Die unter b), d) und e) genannten Komponenten werden mit dem Prepolymer a) in solchen Mengen zur Reaktion gebracht, daß die Kennzahl zwischen 90 und 150, vorzugsweise 100 bis 130, liegt.

e) Gegebenenfalls werden als Ausgangskomponente Verbindungen mit mindestens zwei gegenüber Isocyanaten reaktionsfähigen Wasserstoffatomen und einem Molekulargewicht von 32 bis 399 mitverwendet. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.

Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 - 20 beschrieben.

f) Gegebenenfalls werden Hilfs- und Zusatzmittel mitverwendet wie

a) oberflächenaktive Zusatzstoffe wie Emulgatoren und Schaumstabilisatoren,

b) Reaktionsverzögerer, Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Tris-chlorpropylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München, 1966, z.B. auf den Seiten 103 - 113 beschrieben.

Die Herstellung der im wesentlichen geschlossenzelligen Urethan-, Harnstoff- und Biuretgruppen aufweisenden Hartschaumstoffe mit hervorragender Haftung an festen Oberflächen erfolgt in an sich bekannter Weise. Die erfindungsgemäß erhältlichen Hartschaumstoffe weisen vorzugsweise Rohdichten von 20 - 200 kg/m$^3$ auf.

Ausführungsbeispiele

Beschreibung der Versuche

Um die Haftung verschiedener Prepolymere zu beurteilen, wurden Papierpäckchen von 20cm x 20cm x 15cm am Boden mit 0,8 mm Stahlblech belegt, grundiert mit handelsüblicher Epoxi-Grundierung. Bei Raumtemperatur (20 - 25°C) wurde das Reaktionsgemisch auf das Blech gegeben und nach einer Stunde abgerissen. Die Haftung wurde in sechs Stufen bewertet:

1) Das Blech läßt sich meist nur unter Zuhilfenahme einer Zange mit großem Kraftaufwand ablösen.

2) Das Blech löst sich erst unter erheblichem Kraftaufwand und meist nicht in einem Stück.

3) Das Blech haftet so stark, daß ein gewisser Kraftaufwand notwendig ist, das Blech zu entfernen. Das Blech löst sich nach Überwindung eines Anfangswiderstands meist in einem Stück.

4) Das Blech läßt sich mit geringem mechanischem Aufwand in einem Stück abziehen.

5) Das Blech fällt vor Prüfung nicht ab, löst sich aber bei der geringsten mechanischen Belastung.

6) Das Blech besitzt keine Haftung und fällt vor der Prüfung ab.

| | Beispiel 1 | Beispiel 2 (Vergleich) | Beispiel 3 | Beispiel 4 | Beispiel 5 | Beispiel 6 (Vergleich) |
|---|---|---|---|---|---|---|
| Polyol 1 | 64 | 64 | 64 | 64 | 70 | 70 |
| Polyol 2 | 20 | 20 | 20 | 20 | - | - |
| Stabilisator | 2 | 2 | 2 | 2 | 2 | 2 |
| Katalysator | 0,7 | 0,45 | 0,7 | 0,7 | 0,7 | 0,7 |
| Wasser | 4 | 4 | 4 | 4 | 4 | 3 |
| Trichlorethylphosphat | 10 | 10 | 10 | 10 | - | - |
| Prepolymer 1 | - | - | - | - | 200 | - |
| Prepolymer 2 | - | - | - | 219 | - | - |
| Prepolymer 3 | 217 | - | 97,1 | - | - | - |
| Prepolymer 4 | - | 191 | - | - | - | - |
| Isocyanat 1 | - | - | 97,1 | - | - | 140 |
| Rührzeit | 10 | 10 | 10 | 10 | 10 | 10 |
| Liegezeit | 21 | 24 | 20 | 22 | 22 | 20 |
| Abbindezeit | 187 | 162 | 147 | 182 | 150 | 96 |
| Oberfläche | zäh | zäh | zäh | zäh | zäh | zäh-sprö. |
| Innen | zäh | zäh | zäh | zäh | zäh | zäh |
| Zellgröße | 2 | 2 | 2 | 2 | 2 | 2 |
| Zellstruktur | 2-3 | 2 | 2-3 | 2-3 | 2 | 3 |
| Haftung | 1 | 6 | 2 | 1 | 2 | 6 |
| Schrumpf RT | kein | leicht | kein | kein | kein | kein |
| Rohdichte kg/m | 45,5 | 37,7 | 42 | 46,2 | 37,3 | 36,5 |

Beispiel 1     zeigt die Verwendung eines erfindungsgemäßen Prepolymers mit hervorragender Haftung am Blech von 20 - 25 ° C.

Beispiel 2     (Vergleichsbeispiel) zeigt, daß bei Verwendung eines nicht erfindungsgemäßen

EP 0 462 438 B1

Prepolymers bei Raumtemperatur keinerlei Haftung erhalten wird.

Beispiel 3 — zeigt, daß die Verwendung einer 1:1 Mischung von erfindungsgemäßem Prepolymer mit nicht modifiziertem Isocyanat ebenfalls noch recht gute Ergebnisse gibt.

Beispiel 4 und 5 — zeigen weitere Beispiele für die Verwendung der erfindungsgemäßen Prepolymere.

Beispiel 6 — (Vergleichsbeispiel) zeigt, daß nicht modifiziertes Isocyanat keinerlei Haftung ergibt.

Ausgangsprodukte

Polyol 1 — Polypropylenoxidether der OH-Zahl 530 auf Basis Zucker/Propylenglykol

Polyol 2 — Polyether der OH-Zahl 28 mit Polypropylenglykol als Starter und 87 % PO und endständigen 13 % EO.

Stabilisator — B 8421, Polyethersiloxan der Fa. Goldschmidt, Essen

Katalysator — Diethylcyclohexylamin

Prepolymer 1 — MDI-Prepolymer aus rohem MDI (Viskosität bei 20°C = 100 mPa.s) mit 20 % Polyether der OH-Zahl 56 mit Propylenglykol als Starter und Propylenoxid. Viskosität = 676 mPa.s, NCO = 24,5 %.

Prepolymer 2 — MDI-Prepolymer aus rohem MDI (Viskosität bei 20°C = 200 mPa.s) mit 20 % Polyester der OH-Zahl 28 aus Adipinsäure, Hexandiol, Neopentylglykol, Viskosität = 4500 mPa.s, NCO = 24,2 %.

Prepolymer 3 — MDI-Prepolymer aus rohem MDI (Viskosität bei 20°C = 200 mPa.s) mit 20 % Polyether der OH-Zahl 28 mit Trimethylolpropan als Starter und 86 % Propylenoxid und endständigen 14 % Ethylenoxid Viskosität = 1500 mPa.s, NCO = 24,4 %.

Prepolymer 4 — Isocyanatprepolymer aus rohem MDI (Viskosität bei 20°C = 200 mPa.s) und einem Polyester aus Adipinsäure/Phthalsäure und Diethylenglykol der OH-Zahl 530. Isocyanatgehalt des Prepolymers = 27 %, Viskosität bei 24°C = 1000 mPa.s.

Isocyanat 1 — Rohes MDI, Viskosität bei 20°C: 200 mPa.s.

**Patentansprüche**

1. Verfahren zur Herstellung von im wesentlichen geschlossenzelligen Urethan-, Harnstoff- und Biuretgruppen aufweisenden Hartschaumstoffen mit hervorragender Haftung an festen Oberflächen durch Umsetzung von

   a) endständige NCO-Gruppen aufweisenden Prepolymeren mit
   b) Verbindungen mit mindestens zwei gegenüber Isocyanaten reaktionsfähigen Wasserstoffatomen von einem Molekulargewicht in der Regel von 400 - 10.000 in Gegenwart von
   c) Katalysatoren und
   d) Wasser als Treibmittel und gegebenenfalls in Gegenwart von
   e) Kettenverlängerungs- und/oder Vernetzungsmitteln sowie
   f) Hilfsmitteln und/oder Zusatzstoffen,

   dadurch gekennzeichnet, daß man als NCO-Gruppen aufweisendes Prepolymer das Umsetzungsprodukt von a Gew.-Teilen eines mindestens difunktionellen Polyols mit b Gew.-Teilen eines mindestens difunktionellen Polyisocyanats verwendet, wobei

   1) das Verhältnis a:b mindestens 1:10 beträgt und
   2) die OH-Zahl des mindestens difunktionellen Polyols <100 ist.

2. Verfahren gemäß Anspruch 1, dadurch gekennzeichnet, daß die Umsetzung bei Kennzahlen von 100 bis 130 durchgeführt wird.

3. Verfahren gemäß Anspruch 1 und 2, dadurch gekennzeichnet, daß die im wesentlichen geschlossenzelligen Urethan-, Harnstoff- und Biuretgruppen aufweisenden Hartschaumstoffe Rohdichten von 20 bis 200 kg/m$^3$ besitzen.

4. Verwendung der gemäß Anspruch 1 bis 3 erhältlichen, im wesentlichen geschlossenzelligen Urethan-, Harnstoff- und Biuretgruppen aufweisenden Hartschaumstoffe als Dämmstoffe und/oder zur Verstärkung von mechanischen Konstruktionsteilen.

6

## Claims

1. Process for the production of substantially closed-cell rigid foams containing urethane, urea and biuret groups and having excellent adhesion to solid surfaces by reaction of

a) prepolymers having terminal NCO groups with

b) compounds containing at least two isocyanate-reactive hydrogen atoms and having a molecular weight of generally 400 to 10,000 in the presence of

c) catalysts and

d) water as blowing agent and optionally in the presence of

e) chain extenders and/or crosslinking agents together with

f) auxiliary substances and/or additives,

characterised in that the prepolymer having NCO groups which is used is the reaction product of a parts by weight of an at least difunctional polyol with b parts by weight of an at least difunctional polyisocyanate, wherein

1) the ratio of a:b is at least 1:10 and

2) the OH value of the at least difunctional polyol is < 100.

2. Process according to claim 1, characterised in that the reaction is performed at indices of 100 to 130.

3. Process according to claims 1 and 2, characterised in that the substantially closed-cell rigid foams containing urethane, urea and biuret groups have bulk densities of 20 to 200 kg/m$^3$.

4. Use of the substantially closed-cell rigid foams containing urethane, urea and biuret groups obtainable according to claims 1 to 3 as insulating materials and/or for strengthening mechanical structural components.

## Revendications

1. Procédé de préparation de mousses dures à groupes uréthanne, urée et biuret et à cellules essentiellement fermées, ayant une excellente adhérence sur les surfaces solides, par réaction de

a) des prépolymères à groupes NCO terminaux avec

b) des composés à au moins deux atomes d'hydrogène réactifs avec les isocyanates et ayant un poids moléculaire en général de 400 à 10 000, en présence de

c) des catalyseurs et

d) l'eau qui sert d'agent porogène et le cas échéant en présence de

e) des agents d'allongement des chaînes et/ou agents réticulants et

f) des produits auxiliaires et/ou additifs,

caractérisé en ce que l'on utilise en tant que prépolymère à groupes NCO le produit de réaction de a parties en poids d'un polyol au moins difonctionnel avec b parties en poids d'un polyisocyanate au moins difonctionnel, sous réserve que

1) le rapport a:b est d'au moins 1:10 et

2) l'indice d'OH du polyol au moins difonctionnel est inférieur à 100.

2. Procédé selon la revendication 1, caractérisé en ce que la réaction est réalisée à des indices de 100 à 130.

3. Procédé selon les revendications 1 et 2, caractérisé en ce que les mousses dures à groupes uréthanne, urée et biuret et à cellules essentiellement fermées ont des densités apparentes de 20 à 200 kg/m$^3$.

4. Utilisation des mousses dures à groupes uréthanne, urée et biuret et à cellules essentiellement fermées, obtenues selon revendications 1 à 3, en tant que matériaux isolants et/ou pour le renforcement de pièces de construction mécaniques.